# EUROPEAN PATENT APPLICATION

(11) **EP 4 535 499 A1**
(43) Date of publication of application: **09.04.2025**
(21) Application number: 22944110.0
(22) Date of filing: 30.05.2022
(51) Int. Cl.: H01M 10/42

(54) **BATTERY ENCRYPTION CIRCUIT, BATTERY CHECK METHOD AND APPARATUS, DEVICE AND STORAGE MEDIUM**

(71) Applicant: Beijing Xiaomi Mobile Software Co., Ltd., Beijing 100085 (CN)
(72) Inventor: YANG, Ruifu, Beijing 100085 (CN)
(74) Representative: Dehns Germany Partnerschaft mbB
(86) International application number: PCT/CN2022/096001
(87) International publication number: WO 2023/230768

(57) **Abstract**

The present disclosure provides a battery encryption circuit, a battery, a terminal, a battery check method and apparatus, a device and a storage medium. The battery encryption circuit comprises an encryption part and a communication part, and the encryption part comprises a storage unit and an encryption unit; the communication part is configured to send information to be encrypted stored in the storage unit to the encryption unit; the encryption unit is configured to generate encrypted information according to the information to be encrypted sent by the storage unit; and the communication part is further configured to transmit check information stored in the storage unit and the encrypted information generated by the encryption unit to a processor electrically connected to the battery encryption circuit so as to complete check of a battery. According to the present disclosure, use of counterfeit and shoddy batteries can be better avoided, so that the brand image can be guaranteed, and the use experience of a user can also be improved.

## Description

### TECHNICAL FIELD

The present disclosure relates to the field of terminals, and in particular to a battery encryption circuit, a verification method and apparatus for a battery, a device, and a storage medium.

### BACKGROUND

Currently, the battery is mainly composed of two parts: the battery cell and the protection circuit board. The protection circuit board, while providing the charging and discharging path for the battery cell, also plays the role of protecting the battery cell. The protection circuit board generally has the functions of over-charging and over-discharging protection, charging and discharging over-current protection, short-circuit protection, and battery encryption, etc.

In the related art, the battery encryption circuit of the protection circuit board generally realize the function of the battery encryption through the coulombmeter or encryption chip (encryption integrated circuit, encryption IC), which can be easily cracked and leads to many counterfeit and inferior batteries entering the market. This not only damages the brand image, but also affects the user usage experience.

### SUMMARY

To overcome problems in the related art, the present disclosure provides a battery encryption circuit, a battery, a terminal, a verification method and apparatus for a battery, a device, and a storage medium.

According to a first aspect of embodiments of the present disclosure, there is provided a battery encryption circuit. The battery encryption circuit includes an encryption part and a communication part, where the encryption part includes a storage unit and an encryption unit;
the communication part is configured to send, to the encryption unit, information to be encrypted stored in the storage unit;
the encryption unit is configured to generate encryption information based on the information to be encrypted sent by the storage unit; and
the communication part is further configured to transmit, to a processor electrically connected to the battery encryption circuit, verification information stored in the storage unit, and the encryption information generated by the encryption unit, thereby completing battery verification.

Optionally, the storage unit includes at least one of a first coulombmeter or a first encryption chip; and/or
the encryption unit includes at least one of a second coulombmeter or a second encryption chip.

Optionally, the communication part includes an integrated circuit bus, the storage unit is electrically connected to the encryption unit via the integrated circuit bus, and both the storage unit and the encryption unit are electrically connected to the processor via the integrated circuit bus.

Optionally, the communication part includes a first communication unit, and the first communication unit is configured to send, to the encryption unit, the information to be encrypted stored in the storage unit; and/or
the communication part includes a second communication unit, and the second communication unit is configured to transmit, to the processor electrically connected to the battery encryption circuit, the verification information stored in the storage unit; the communication part includes a third communication unit, and the third communication unit is configured to transmit, to the processor electrically connected to the battery encryption circuit, the encryption information generated by the encryption unit.

Optionally, the information to be encrypted includes setting battery information, and the verification information includes first identification information and the setting battery information; or
the information to be encrypted includes setting battery information and first identification information, and the verification information includes the setting battery information; or
the information to be encrypted includes setting battery information and first identification information, and the verification information includes the setting battery information and the first identification information.

According to a second aspect of the embodiments of the present disclosure, there is provided a battery. The battery includes a battery cell and a protection circuit board, and the protection circuit board includes the battery encryption circuit as described in the first aspect.

According to a third aspect of the embodiments of the present disclosure, there is provided a terminal. The terminal includes a processor and the battery as described in the second aspect, and the battery encryption circuit of the protection circuit board of the battery is electrically connected to the processor.

According to a fourth aspect of the embodiments of the present disclosure, there is provided a verification method for a battery. The verification method includes:
sending an information request instruction to the battery;
receiving verification information sent by a storage unit, and encryption information sent by an encryption unit; and
performing verification on the battery based on pre-stored information stored in the verification device, the verification information and the encryption information, thereby determining whether the battery meets a requirement.

Optionally, the encryption information is determined by encrypting, based on first configuration information preset in the encryption unit, information to be encrypted, thereby obtaining the encryption information; and
the performing the verification on the battery based on the pre-stored information stored in the verification device, the verification information and the encryption information includes:
obtaining decryption information by decrypting the encryption information based on preset second configuration information, where the second configuration information corresponds to the first configuration information; and
performing the verification on the battery based on the decryption information, the verification information and the pre-stored information.

Optionally, the performing the verification on the battery based on the decryption information, the verification information and the pre-stored information includes:
verifying a source of the battery based on the decryption information, the verification information and the pre-stored information, thereby determining whether the source of the battery is reliable; and
verifying a quality of the battery based on setting battery information of the decryption information or setting battery information of the verification information, thereby determining whether the battery is qualified.

Optionally, the information to be encrypted includes setting battery information, the verification information includes first identification information and the setting battery information, and the pre-stored information includes second identification information; and
the verifying the source of the battery based on the decryption information, the verification information and the pre-stored information includes:
if the decryption information matches the setting battery information of the verification information, and the pre-stored information matches the first identification information of the verification information, determining the source of the battery is reliable.

Optionally, the information to be encrypted includes setting battery information and first identification information, the verification information includes the setting battery information, and the pre-stored information includes second identification information; and
the verifying the source of the battery based on the decryption information, the verification information and the pre-stored information includes:
if the decryption information includes information matching the setting battery information of the verification information, and the decryption information includes information matching the pre-stored information, determining the source of the battery is reliable.

Optionally, the information to be encrypted includes setting battery information and first identification information, the verification information includes the setting battery information and the first identification information, and the pre-stored information includes second identification information; and
the verifying the source of the battery based on the decryption information, the verification information and the pre-stored information includes:
if the decryption information includes information matching the setting battery information of the verification information, and the decryption information and/or the verification information includes information matching the pre-stored information, determining the source of the battery is reliable.

According to a fifth aspect of the embodiments of the present disclosure, there is provided a verification apparatus for a battery. The verification apparatus includes:
a sending module, configured to send an information request instruction to the battery;
a receiving module, configured to receive verification information sent by a storage unit, and encryption information sent by an encryption unit; and
a verifying module, configured to perform verification on the battery based on pre-stored information stored in the verification device, the verification information and the encryption information, thereby determining whether the battery meets a requirement.

Optionally, the encryption information is determined by encrypting, based on first configuration information preset in the encryption unit, information to be encrypted, thereby obtaining the encryption information; and
the verifying module is specifically configured to:
obtain decryption information by decrypting the encryption information based on preset second configuration information, where the second configuration information corresponds to the first configuration information; and
perform the verification on the battery based on the decryption information, the verification information and the pre-stored information.

Optionally, the verifying module is specifically configured to:
verify a source of the battery based on the decryption information, the verification information and the pre-stored information, thereby determining whether the source of the battery is reliable; and
verify a quality of the battery based on setting battery information of the decryption information or setting battery information of the verification information, thereby determining whether the battery is qualified.

Optionally, the information to be encrypted includes setting battery information, the verification information includes first identification information and the setting battery information, and the pre-stored information includes second identification information; and the verifying module is specifically configured to determine that the source of the battery is reliable if the decryption information matches the setting battery information of the verification information, and the pre-stored information matches the first identification information of the verification information; or
the information to be encrypted includes setting battery information and first identification information, the verification information includes the setting battery information, and the pre-stored information includes second identification information; and the verifying module is specifically configured to determine that the source of the battery is reliable if the decryption information includes information matching the setting battery information of the verification information, and the decryption information includes information matching the pre-stored information; or
the information to be encrypted includes setting battery information and first identification information, the verification information includes the setting battery information and the first identification information, and the pre-stored information includes second identification information; and the verifying module is specifically configured to determine that the source of the battery is reliable if the decryption information includes information matching the setting battery information of the verification information, and the decryption information and/or the verification information includes information matching the pre-stored information.

According to a sixth aspect of the embodiments of the present disclosure, there is provided a verification device for a battery. The verification device includes:
a processor; and
a memory, configured to store an instruction executable by the processor; where
the processor is configured to perform the verification method for the battery as described in the fourth aspect.

According to a seventh aspect of the embodiments of the present disclosure, there is provided a non-transitory computer-readable storage medium. When an instruction in the storage medium is executed by a processor of a verification device for a battery, the verification device is enabled to perform the verification method for the battery as described in the fourth aspect.

The technical solutions provided by the embodiments of the present disclosure may include the following beneficial effects: the encryption part of the battery encryption circuit in the present disclosure may include the storage unit and the encryption unit, where the storage unit may store the verification information and the information to be encrypted, and the encryption unit may generate the encryption information by encrypting the information to be encrypted. The storage unit may transmit the verification information to the processor, and the encryption unit may transmit the encryption information to the processor to enable the processor to complete the verification for the battery, so as to better avoid the use of counterfeit and inferior batteries, which can guarantee the brand image and enhance the user usage experience.

It should be understood that the above general description and the subsequent detailed description are exemplary and explanatory only, and do not limit the present disclosure.

### BRIEF DESCRIPTION OF THE DRAWINGS

The accompanying drawings herein are incorporated into the specification and form a part of this specification, illustrating embodiments in accordance with the present invention and being used in conjunction with the specification to explain the principles of the present invention.
FIG. 1 is a block diagram of a battery encryption circuit illustrated according to an embodiment (a processor is included in the figure).
FIG. 2 is a schematic diagram of a circuit of a terminal illustrated according to an embodiment.
FIG. 3 is a flowchart of a verification method for a battery illustrated according to an embodiment.
FIG. 4 is a flowchart of a verification method for a battery illustrated according to an embodiment.
FIG. 5 is a flowchart of a verification method for a battery illustrated according to an embodiment.
FIG. 6 is a flowchart of a verification method for a battery illustrated according to an embodiment.
FIG. 7 is a block diagram of a verification apparatus for a battery illustrated according to an embodiment.
FIG. 8 is a block diagram of a verification device for a battery illustrated according to an embodiment.

### DETAILED DESCRIPTION

Exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the present invention. On the contrary, they are only examples of devices and methods consistent with some aspects of the present invention as detailed in the attached claims.

In some encryption schemes of the related art, the official battery information is burned into the encryption IC (or coulombmeter) when the battery is manufactured in the manufacturing line of the battery factory, and the encryption IC (or coulombmeter) encrypts the official battery information by using a private key, and then generates a digital signature. The private key is known only to the encryption IC (or coulombmeter) factory. When the battery is assembled to the whole machine, the encryption IC (or coulombmeter) reports the digital signature to the processor of the whole machine, and the processor decrypts the digital signature by using a public key (the public key is used in conjunction with the encryption IC (or coulombmeter) and is preset to the processor in advance), and finally performs verification to authenticate reliability of the information source. If it is reliable, the battery is proved to be an official battery.

The above encryption scheme involves only two parties, i.e., the battery factory and the encryption IC (or coulombmeter) factory, and is easily cracked. For example, a third party may privately purchase a defective officially manufactured battery equipped with the encryption IC (or coulombmeter) for secondary sale, or may privately manufacture a battery through the official encryption IC (or coulombmeter) circulating on the black market, etc. The privately manufactured batteries have varying performance due to the manufacturing line not being controlled, and there is a great safety hazard when they are brought to the market, which affects both the user usage experience and the brand image.

The embodiments of the present disclosure provide a battery encryption circuit. The encryption part of the battery encryption circuit may include the storage unit and the encryption unit, where the storage unit may store the verification information and the information to be encrypted, and the encryption unit may generate the encryption information by encrypting the information to be encrypted. The storage unit may transmit the verification information to the processor, and the encryption unit may transmit the encryption information to the processor to enable the processor to complete the verification for the battery, so as to better avoid the use of counterfeit and inferior batteries, which can guarantee the brand image and enhance the user usage experience. In some embodiments, the verification information and the information to be encrypted may be consistent or inconsistent.

In an exemplary embodiment, a battery encryption circuit 10 is provided. The battery encryption circuit 10 may be provided on a protection circuit board of a battery, and the protection circuit board may provide protection, information encryption, verification and other functions for the battery cell.

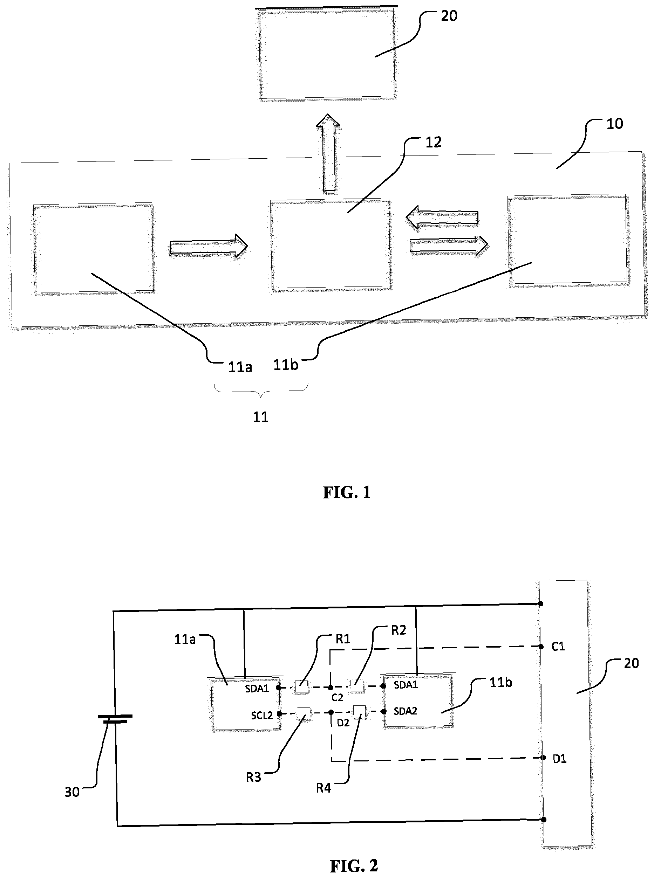

Referring to FIG. 1, the battery encryption circuit 10 may include an encryption part 11. The encryption part 11 may include a storage unit 11a. The storage unit 11a may store first identification information and setting battery information. The first identification information may be official identification information generated by a terminal official based on an official algorithm, for example, the first identification information may include an official identification code.

When the storage unit 11a is shipped, the official identification code has already been burned in it. The algorithm for generating the official identification information is only known to the official, and the official identification code is only known to the manufacturer of the storage unit 11a and the terminal official. In some embodiments, the manufacturer of the storage unit 11a may be referred to as the first relevant party.

The setting battery information may be provided by the battery manufacturer, and the setting battery information may include an identification code, manufacturing information, performance information, etc. of the battery. The setting battery information may also include information used for characterizing whether the battery is qualified or not, which is not limited. In some embodiments, the battery manufacturer may be referred to as the second relevant party.

In some embodiments, the storage unit 11a may be a first coulombmeter, a first encryption chip (IC), or other components that can store the verification information, which is not limited.

In some embodiments, the storage unit 11a may include a first coulombmeter. The terminal official may generate the official identification code by using its own official algorithm. When the first coulombmeter is shipped, the manufacturer of the first coulombmeter may first burn the official identification code into the first coulombmeter. Then, the first coulombmeter is sent to the battery manufacturer. After completing the manufacturing of the battery cell, the battery manufacturer may automatically generate in the manufacturing line the setting battery information of the battery such as the identification code, the manufacturing information, the performance information, etc., and then burn the setting battery information into the first coulombmeter, whereupon the first coulombmeter can store the official identification code and the setting battery information.

In some embodiments, the encryption part 11 may further include an encryption unit 11b. The encryption unit 11b may generate the encryption information based on the information to be encrypted that is transmitted by the storage unit 11a. It should be noted that the information to be encrypted may include the setting battery information, and may also include the first identification information, which is not limited.

In some embodiments, the encryption unit 11b is provided by the manufacturer of the encryption unit 11b, and the encryption unit 11b may be preset with first configuration information used for realizing the encryption function. The encryption unit 11b may encrypt, by using the first configuration information, the information to be encrypted, thereby generating the encryption information. The encryption information may be a digital signature or other forms of information, which is not limited. In some embodiments, the manufacturer of the encryption unit 11b may be referred to as the third relevant party. The third relevant party is different from the first relevant party and the second relevant party.

The encryption unit 11b may be a second coulombmeter, a second encryption chip (IC), or other components with encryption functions, which is not limited.

It should be noted that when the storage unit 11a is the first coulombmeter, and the encryption unit 11b is the second coulombmeter, the first coulombmeter and the second coulombmeter may belong to different manufacturers respectively, thereby better avoiding the use of counterfeit and inferior batteries. When the storage unit 11a is the first encryption chip, and the encryption unit 11b is the second encryption chip, the first encryption chip and the second encryption chip may belong to different manufacturers respectively, thereby better avoiding the use of counterfeit and inferior batteries.

In some embodiments, the encryption unit 11b may include the second encryption chip. The first configuration information may include a private key. The manufacturer of the encryption chip burns the private key into the second encryption chip. When receiving the information to be encrypted that is transmitted by the storage unit 11a, the second encryption chip may obtain the encryption information by encrypting, based on the private key, the information to be encrypted.

In some embodiments, the battery encryption circuit 10 may include a communication part 12. The communication part 12 may be configured to send to the encryption unit 11b the information to be encrypted that is stored in the storage unit 11a, and transmit, to a processor 20 electrically connected to the battery encryption circuit 10, the verification information that is stored in the storage unit 11a, and the encryption information that is generated by the encryption unit 11b, thereby completing the verification for the battery.

In some embodiments, the communication part 12 may include a wired communication unit, or may include a wireless communication unit, which is not limited. The wired communication unit may include an integrated circuit bus (Inter-Integrated Circuit, IIC), and the wireless communication unit may include a Bluetooth communication unit, which is not limited.

It should be noted that the verification information may include the setting battery information, and may also include the first identification information, which is not limited. For example, the information to be encrypted includes the setting battery information, and the verification information includes the setting battery information and the first identification information, i.e., the storage unit 11a may store the setting battery information and the first identification information, and the storage unit 11a may transmit the setting battery information and the first identification information as the verification information to the processor 20, and send the setting battery information as the information to be encrypted to the encryption unit 11b for encryption. For another example, the information to be encrypted includes the setting battery information and the first identification information, and the verification information includes the setting battery information, i.e., the storage unit 11a may store the setting battery information and the first identification information, and the storage unit 11a may transmit only the setting battery information as the verification information to the processor 20, and send the setting battery information and the first identification information as the information to be encrypted to the encryption unit 11b for encryption. For another example, the information to be encrypted includes the setting battery information and the first identification information, and the verification information also includes the setting battery information and the first identification information, i.e., the storage unit 11a may store the setting battery information and the first identification information, and the storage unit 11a may transmit the setting battery information and the first identification information as the verification information to the processor 20 at the same time, and send the setting battery information and the first identification information as the information to be encrypted at the same time to the encryption unit 11b for encryption.

In some embodiments, referring to FIGS. 1 and 2, the battery encryption circuit 10 is electrically connected to the processor 20. The storage unit 11a includes the first coulombmeter, the encryption unit 11b includes the second encryption chip, and the communication part 12 includes the integrated circuit bus. The integrated circuit bus includes a first portion and a second portion.

The first portion is disposed between the first coulombmeter and the second encryption chip such that the first coulombmeter is electrically connected to the second encryption chip. Referring to FIG. 2, the first portion includes a first line and a second line, where a line between port SDA1 of the first coulombmeter and port SDA2 of the second encryption chip is referred to as the first line, and a line between port SCL1 of the first coulombmeter and port SCL2 of the second encryption chip is referred to as the second line.

The second portion is disposed between the first portion and the processor 20, and the first portion and the second portion work together to realize communication between the first coulombmeter and the processor 20, and realize communication between the second encryption chip and the processor 20. Referring to FIG. 2, the second portion includes a third line and a fourth line, where a line between port C1 and node C2 of the first line is referred to as the third line, and a line between port D1 and node D2 of the second line is referred to as the fourth line.

In this embodiment, after the first coulombmeter is electrically connected to the second encryption chip via the integrated circuit bus, the information to be encrypted (e.g., the setting battery information) stored in the first coulombmeter may then be transmitted to the second encryption chip via the first line and the second line. Alternatively, the first coulombmeter may transmit, via the first line, the second line, the third line, and the fourth line, the verification information (e.g., the setting battery information and the first identification information) to the processor 20 electrically connected to the battery encryption circuit 10, and the second encryption chip may transmit, via the first line, the second line, the third line, and the fourth line, the encryption information to the processor 20. The processor 20 may realize the verification for the battery based on stored pre-stored information, the verification information and the encryption information, so as to avoid the use of counterfeit and inferior batteries, which can guarantee the brand image and enhance the user usage experience.

It should be noted that the pre-stored information may be of the same type as the first identification information, and the pre-stored information may include second identification information. The second identification information may be official identification information generated by the first relevant party based on the official algorithm, for example, the second identification information may include the official identification code.

In this embodiment, the processor 20 may obtain the decryption information by decrypting the encryption information. If the decryption information is the same as the setting battery information of the verification information, and the pre-stored information is the same as the first identification information of the verification information, the source of the battery is considered to be reliable, i.e., the battery is the official battery. The processor 20 may also determine whether the quality of the battery is qualified based on the setting battery information, so as to better avoid counterfeit and inferior batteries.

Additionally, in this embodiment, referring to FIG. 2, a first resistor R1 may be provided between port SDA1 of the first coulombmeter and node C2 of the first line, a second resistor R2 may be provided between node C2 of the first line and port SDA2 of the second encryption chip, a third resistor R3 may be provided between port SCL1 of the first coulombmeter and node D2 of the second line, and a fourth resistor R4 may be provided between node D2 of the second line and port SCL2 of the second encryption chip, so as to provide current-limiting protection for the associated devices (e.g., the first coulombmeter, the second encryption chip, and the processor 20).

It should be noted that in addition to the above protection effect realized by setting the resistor, the protection effect on the devices such as the first coulombmeter, the second encryption chip, and the processor 20 may also be realized by other means, which is not limited.

The battery encryption circuit 10 may better avoid the use of counterfeit and inferior batteries, which can guarantee the brand image and improve the user usage experience.

In an exemplary embodiment, a battery encryption circuit 10 is provided. In the battery encryption circuit 10, the communication part 12 may include a first communication unit (not shown in the figure). The first communication unit is configured to send, to the encryption unit 11b, the information to be encrypted that is stored in the storage unit 11a. The first communication unit may be a wired communication unit or a wireless communication unit, which is not limited. For example, the first communication unit may be an integrated circuit bus.

In some embodiments, the communication part 12 may also include a second communication unit (not shown in the figure). The second communication unit may be configured to transmit, to the processor 20 electrically connected to the battery encryption circuit 10, the verification information stored in the storage unit 11a. The second communication unit may be of the same type as the first communication unit, or may be different from the first communication unit, which is not limited. For example, the second communication unit may be a Bluetooth communication unit.

In some embodiments, the communication part 12 may also include a third communication unit (not shown in the figure). The third communication unit is configured to transmit, to the processor 20 electrically connected to the battery encryption circuit 10, the encryption information generated by the encryption unit 11b. The third communication unit may be of the same type as the second communication unit, or may be different from the second communication unit, which is not limited. For example, the third communication unit may be a Bluetooth communication unit.

In some embodiments (not shown in the figure), the first communication unit is an integrated circuit bus, and the second communication unit and the third communication unit are both Bluetooth communication units, where the second communication unit includes a first Bluetooth communication unit, and the third communication unit includes a second Bluetooth communication unit. The storage unit 11a transmits, to the encryption unit 11b via the integrated circuit bus, the information to be encrypted. The encryption unit 11b generates the encryption information based on the information to be encrypted. The storage unit 11a transmits the verification information to the processor 20 via the first Bluetooth communication unit. The encryption unit 11b transmits the encryption information to the processor 20 via the second Bluetooth communication unit.

In the battery encryption circuit 10, by providing the first communication unit, the second communication unit, and the third communication unit, the transmission of information can be better realized, and the transmission of the information to be encrypted, the verification information, and the encryption information can be better avoided from affecting each other, which further improves the user usage experience.

In an exemplary embodiment, a battery is provided. As shown with reference to FIGS. 1 and 2, the battery may include a battery cell 30 and a protection circuit board, where the protection circuit board includes the battery encryption circuit 10 of any of the above embodiments. The battery encryption circuit 10 is electrically connected to the battery cell 30, and the encryption part 11 and the communication part 12 of the battery encryption circuit 10 may provide a verification function for the battery cell 30, such as anti-counterfeiting detection and quality detection, which can better avoid the use of counterfeit and inferior batteries, guarantee the brand image, and improve the user usage experience.

In some embodiments, referring to FIGS. 1 and 2, the battery is applied to a cell phone. The battery encryption circuit 10 includes an encryption part 11, a communication part 12 and a protection part (not shown in the figure), where the protection part includes a lithium protection chip (IC), the encryption part 11 includes a storage unit 11a and an encryption unit 11b, the storage unit 11a includes a first coulombmeter, the encryption unit 11b includes a second encryption chip, and the communication part 12 includes an integrated circuit bus.

The first coulombmeter may store setting battery information and first identification information. The first identification information may be an official identification code. In some embodiments, when the first coulombmeter is shipped, the first coulombmeter has been burned with the official identification code exclusive to the cell phone official, and the official identification code is known only to the manufacturer of the coulombmeter and the cell phone official. The official identification code is generated based on a setting algorithm of the cell phone official, and only the cell phone official knows the setting algorithm. When the battery is manufactured in the manufacturing line of the battery manufacturer, the battery information of the cell phone official may be burned into the first coulombmeter. In some embodiments, the setting battery information may include information that indicates whether the battery is qualified. That is, if there is a defective battery, the information that indicates the battery as a defective product may be simultaneously burned into the first coulombmeter.

The first coulombmeter may synchronize, to the second encryption chip via the integrated circuit bus, the setting battery information as the information to be encrypted, and the second encryption chip may generate a digital signature (i.e., encryption information) by encrypting, based on a private key, the information to be encrypted. The private key is known only to the manufacturer of the second encryption chip.

When the battery is assembled on the cell phone, the second encryption chip may report the digital signature, via the integrated circuit bus, to the processor of the cell phone, and the processor may be preset with a public key that is used in conjunction with the second encryption chip. The processor may obtain the decryption information by decrypting the digital signature based on the public key. The decryption information is also the information to be encrypted before the encryption process. In addition, the first coulombmeter may report, via the integrated circuit bus to the processor of the cell phone, the setting battery information and the first identification information as the verification information.

Pre-stored information may be provided in the cell phone, and the pre-stored information may be second identification information. The second identification information is of the same type as the first identification information, and may be the official identification code.

After obtaining the decryption information and the verification information, the processor may compare the decryption information with the setting battery information of the verification information, and compare the pre-stored information with the first identification information of the verification information, thereby determining the reliability of the source of the battery. In some embodiments, if it is determined that the pre-stored information matches (e.g., is the same as) the first identification information of the verification information, then it indicates that the control of the battery manufacturer and the control of the terminal official are reliable, otherwise it indicates that there is a defect in the control of the battery manufacturer and/or the control of the terminal official. If the decryption information matches (e.g., is the same as) the setting battery information of the verification information, then it indicates that the control of the manufacturer of the second encryption chip is reliable, otherwise it indicates that there is a defect in the control of the manufacturer of the second encryption chip.

That is, if it is determined that the decryption information matches the setting battery information of the verification information, and it is determined that the pre-stored information matches the first identification information of the verification information, then it may be determined that the source of the battery is reliable, i.e., the battery is the official battery.

Additionally, the processor may also verify the quality of the battery based on the setting battery information of the verification information or the setting battery information of the decryption information, thereby determining whether the battery is a non-defective product.

Through the above verification, the processor can determine to avoid the use of counterfeit and inferior batteries.

In this embodiment, multiple parties such as the manufacturer of the first coulombmeter, the manufacturer of the battery, the manufacturer of the second encryption chip, and the cell phone official participate in the verification scheme of the control of the battery, and the information of each other is opaque, so that the circulation of illegal batteries can be controlled more effectively, which can not only guarantee the brand image, but also enhance the user usage experience.

In an exemplary embodiment, a terminal is provided. The terminal may be a terminal that requires the use of a battery, such as a cell phone, a tablet computer, a laptop computer, a wearable terminal, and the like, which is not limited. In some embodiments, the terminal may include a processor and the battery of any of the above embodiments. In some embodiments, the battery includes a battery cell and a protection circuit board, where the protection circuit board includes the battery encryption circuit of the above embodiment, and the battery encryption circuit is electrically connected to the processor.

Referring to FIGS. 1 and 2, in the terminal, the storage unit 11a may store the information to be encrypted, and transmit, to the encryption unit 11b via the communication part 12, the information to be encrypted; the encryption unit 11b generates the encryption information based on the information to be encrypted, and the storage unit 11a may store the verification information, and may transmit the verification information to the processor via the communication part 12. The encryption unit 11b may transmit the encryption information to the processor described above via the communication part 12. The processor may then realize the verification for the battery based on the encryption information, the verification information, and the pre-stored information that is pre-stored, so as to avoid the use of counterfeit and inferior batteries, which can guarantee the brand image and enhance the user usage experience.

In an exemplary embodiment, a verification method for a battery is provided. The verification method for the battery is used for verifying the battery of the above embodiment, and the method may be applied to a verification device for a battery, i.e., the verification device for the battery may realize the verification for the battery by using this method. It should be noted that the verification device may be the terminal in the above-described embodiment, or may be other devices, which is not limited.

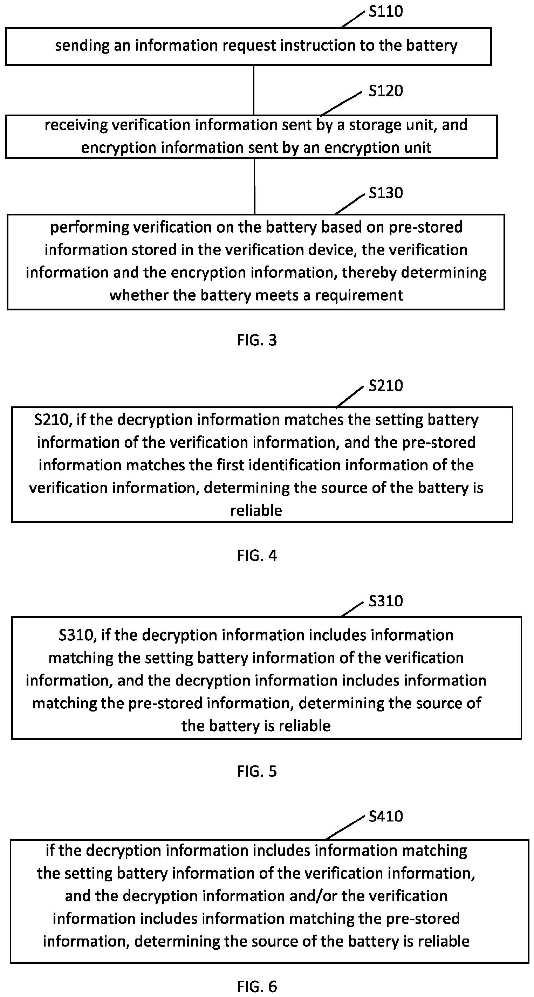

Referring to FIG. 3, the method may include the following steps S110 to S130.

At step S110, an information request instruction is sent to the battery.

At step S120, verification information sent by a storage unit, and encryption information sent by an encryption unit are received.

At step S130, verification on the battery is performed based on pre-stored information stored in the verification device, the verification information and the encryption information, thereby determining whether the battery meets a requirement.

At step S110, after the battery is installed on the verification device, a processor of the verification device may send the information request instruction to the battery. For example, the processor may send the information request instruction to the encryption unit and the storage unit in the battery, respectively. After the encryption unit and the storage unit receive the information request instruction, the encryption unit may send the encryption information to the processor, and the storage unit may send the verification information to the processor.

At step S120, after the encryption unit sends the encryption information to the processor, the processor may receive the encryption information. After the storage unit sends the verification information to the processor, the processor may receive the verification information. In some embodiments, the processor may receive the encryption information and the verification information via a wired communication method, or may receive the encryption information and the verification information via a wireless communication method, which is not limited.

At step S130, the terminal may be provided with the pre-stored information, and after the processor receives the encryption information and the verification information, the processor may complete the verification for the battery based on the pre-stored information, the encryption information and the verification information, thereby determining whether the battery meets the requirement.

In some embodiments, the encryption unit may be preset with first configuration information, and after the storage unit transmits to the encryption unit the information to be encrypted, the encryption unit may obtain the encryption information by encrypting, based on the first configuration information, the information to be encrypted. For example, the first configuration information may include a private key, and the encryption unit may generate the encryption information by encrypting, based on the private key, the information to be encrypted. The encryption information may be a digital signature.

In some embodiments, the first configuration information may be set before the encryption unit leaves the factory, or may be set after the encryption unit leaves the factory, which is not limited. Moreover, after the first configuration information is set, it may be subsequently modified to better meet different requirements.

At this step, the processor may be preset with second configuration information, where the second configuration information corresponds to the first configuration information and is used for decrypting the information that is encrypted based on the first configuration information, i.e., the second configuration information is used in conjunction with the encryption unit. After receiving the encryption information, the processor may obtain the decryption information by decrypting the encryption information based on the second configuration information. It should be noted that if the controls of respective parties are not defective and the encryption information is decrypted normally, the decryption information is the same as the information to be encrypted.

After obtaining the decryption information, the processor may perform the verification on the battery based on the pre-stored information, the decryption information and the verification information as received.

In some embodiments, the verification information may include setting battery information, the information to be encrypted may include the setting battery information, at least one of the verification information or the information to be encrypted includes first identification information, and the pre-stored information may include second identification information.

In some embodiments, the setting battery information may be provided by the battery manufacturer, and the setting battery information may include an identification code, manufacturing information, performance information, etc. of the battery. The setting battery information may also include information used for characterizing whether the battery is qualified or not, which is not limited.

In some embodiments, the first identification information may be official identification information generated by the terminal official based on an official algorithm, for example, the first identification information may include an official identification code. In some embodiments, the storage unit has been burned with the official identification code when the storage unit is shipped, and the manufacturer of the storage unit may be referred to as the first relevant party. The official identification code is known only to the first relevant party and the terminal official. The official identification code is generated based on a setting algorithm of the terminal official, and only the terminal official knows the setting algorithm. It should be noted that the second identification information is of the same type as the first identification information. For example, the second identification information may be official identification information generated by the terminal official based on the official algorithm. For example, the second identification information includes the official identification code.

At this step, if the verification information includes information matching the decryption information, then it indicates that the control of the manufacturer of the encryption unit and the control of the manufacturer of the battery are reliable, otherwise it indicates that there is a defect in the control of the manufacturer of the encryption unit and/or the control of the manufacturer of the battery. If it is determined that the verification information includes information matching the pre-stored information, then it indicates that the control of the manufacturer of the storage unit is reliable, otherwise it indicates that there is a defect in the control of the manufacturer of the storage unit.

That is, if it is determined that the verification information includes the information matching the decryption information, and the verification information includes the information matching the pre-stored information, then it may be determined that the control of the manufacturer of the battery, the control of the manufacturer of the storage unit, and the control of the manufacturer of the encryption unit are all reliable, which may determine that the source of the battery is reliable, and the battery is the official battery.

Additionally, the processor may verify the quality of the battery based on the setting battery information of the verification information or the setting battery information of the decryption information, thereby determining whether the battery is a non-defective product, or determining whether the battery is qualified.

At this step, if it is determined that the source of the battery is reliable, the battery is the official battery, and the quality of the battery meets the requirement, then it may be determined that the battery meets the requirement. That is, "the battery meets the requirement" may be determined as the result of the verification.

In some embodiments, if it is determined that the verification information does not include information matching the decryption information, and/or if it is determined that the verification information does not include information matching the pre-stored information, then it indicates that the source of the battery is not reliable, which may indicate that the battery is a counterfeit battery, and the battery does not meet the requirement. That is, "the battery does not meet the requirement" may be determined as the result of the verification.

In some embodiments, if it is determined that the quality of the battery characterized by the setting battery information does not meet the requirement, then it is indicated that the battery is an inferior battery, which may also determine that the battery does not meet the requirement. That is, "the battery does not meet the requirement" may be determined as the result of the verification.

It should be noted that the result of the verification may be output in the form of text, or in the form of an image, or in the form of audio or video, which is not limited.

The method can better avoid the use of counterfeit and inferior batteries, which can guarantee the brand image and enhance the user usage experience.

In an exemplary embodiment, a verification method for a battery is provided. In this method, the storage unit of the battery may store the first identification information and the setting battery information. In some embodiments, the information to be encrypted includes the above-described setting battery information, the verification information includes the above-described first identification information and the above-described setting battery information, and the pre-stored information includes the second identification information.

Referring to FIG. 4, in this method, verifying the source of the battery based on the decryption information, the verification information and the pre-stored information may include the following step S210.

At step S210, if the decryption information matches the setting battery information of the verification information, and the pre-stored information matches the first identification information of the verification information, the source of the battery is determined to be reliable.

In some embodiments, if it is determined that the decryption information includes information that is the same as the setting battery information of the verification information, it may be determined that the decryption information matches the setting battery information of the verification information. It should be noted that the decryption information includes the information that is the same as the setting battery information of the same information, indicating that the setting battery information obtained by decrypting the encryption information is the same as the setting battery information stored in the storage unit, and indicating that the control of the manufacturer of the encryption unit and the control of the manufacturer of the battery cell are reliable.

In some embodiments, if it is determined that the pre-stored information includes information that is the same as the first identification information of the verification information, it may be determined that the pre-stored information matches the first identification information of the verification information. It should be noted that the pre-stored information includes the information that is the same as the first identification information of the verification information, indicating that the second identification information stored in the verification device is the same as the first identification information stored in the storage unit, and indicating that the control of the manufacturer of the storage unit and the control of the terminal official are reliable.

Understandably, the manufacturing process of the battery mainly involves the manufacturer of the storage unit, the manufacturer of the battery, the manufacturer of the encryption unit, and the terminal official, and if it is determined that the control of the manufacturer of the storage unit, the control of the manufacturer of the battery, and the control of the manufacturer of the encryption unit described above are all reliable, then it can be determined that the source of the battery is reliable, and the battery is the official battery.

In this method, the source of the battery is verified by comparing the decryption information with the setting battery information of the verification information, and comparing the pre-stored information with the first identification information of the verification information, which can better avoid counterfeit batteries.

In an exemplary embodiment, a verification method for a battery is provided. In this method, the information to be encrypted includes the setting battery information and the first identification information, the verification information includes the setting battery information, and the pre-stored information includes the second identification information. In this embodiment, referring to FIG. 5, verifying the source of the battery based on the decryption information, the verification information and the pre-stored information may include the following step S310.

At step S310, if the decryption information includes information matching the setting battery information of the verification information, and the decryption information includes information matching the pre-stored information, the source of the battery is determined to be reliable.

In some embodiments, if it is determined that the decryption information includes information that is the same as the setting battery information of the verification information, it may be determined that the decryption information includes the information matching the setting battery information of the verification information. It should be noted that the decryption information includes the information that is the same as the setting battery information of the verification information, indicating that the setting battery information obtained by decrypting the encryption information is the same as the setting battery information stored in the storage unit, and indicating that the control of the manufacturer of the encryption unit and the control of the manufacturer of the battery cell are reliable.

In some embodiments, if it is determined that the decryption information includes information that is the same as the pre-stored information, it can be determined that the decryption information includes the information matching the pre-stored information. It should be noted that the decryption information includes the information that is the same as the pre-stored information, indicating that the first identification information obtained by decrypting the encryption information is the same as the second identification information pre-stored in the verification device, indicating that the first identification information stored in the storage unit is the same as the second identification information stored in the verification device, and indicating that the control of the manufacturer of the storage unit and the control of the terminal official are reliable.

In this method, the source of the battery is verified by comparing the decryption information with the setting battery information of the verification information, and comparing the pre-stored information with the first identification information of the verification information, which can better avoid counterfeit batteries.

In an exemplary embodiment, a verification method for a battery is provided. In this method, the information to be encrypted includes the setting battery information and the first identification information, the verification information includes the setting battery information and the first identification information, and the pre-stored information includes the second identification information. In this embodiment, referring to FIG. 6, verifying the source of the battery based on the decryption information, the verification information and the pre-stored information may include the following step S410.

At step S410, if the decryption information includes information matching the setting battery information of the verification information, and the decryption information and/or the verification information includes information matching the pre-stored information, the source of the battery is determined to be reliable.

In some embodiments, if it is determined that the decryption information includes information that is the same as the setting battery information of the verification information, it may be determined that the decryption information matches the setting battery information of the verification information. It should be noted that the decryption information includes the information that is the same as the setting battery information of the verification information, indicating that the setting battery information obtained by decrypting the encryption information is the same as the setting battery information stored in the storage unit, and indicating that the control of the manufacturer of the encryption unit and the control of the manufacturer of the battery cell are reliable.

In some embodiments, if it is determined that the decryption information and/or the verification information includes information that is the same as the pre-stored information, it may be determined that the decryption information or the verification information includes the information matching the pre-stored information. It should be noted that in the case where the control of the manufacturer of the encryption unit and the control of the manufacturer of the battery cell are determined to be reliable, the fact that the decryption information or the verification information includes the same information as the pre-stored information indicates that the first identification information stored in the storage unit is the same as the second identification information stored in the verification device, and indicates that the control of the manufacturer of the storage unit and the control of the terminal official are reliable.

In this method, the source of the battery is verified by comparing the decryption information with the setting battery information of the verification information, and comparing the pre-stored information with the first identification information of the verification information, which can better avoid counterfeit batteries.

In an exemplary embodiment, a verification apparatus for a battery is provided. The apparatus is configured to implement the verification method described above. The verification apparatus for the battery is configured to perform verification on the battery in the above-described embodiment, and the apparatus may be applied to a verification device for a battery, i.e., the verification device for the battery may realize the verification for the battery by using the apparatus. It should be noted that the verification device may be the terminal in the above-described embodiment, or may be other devices, which is not limited.

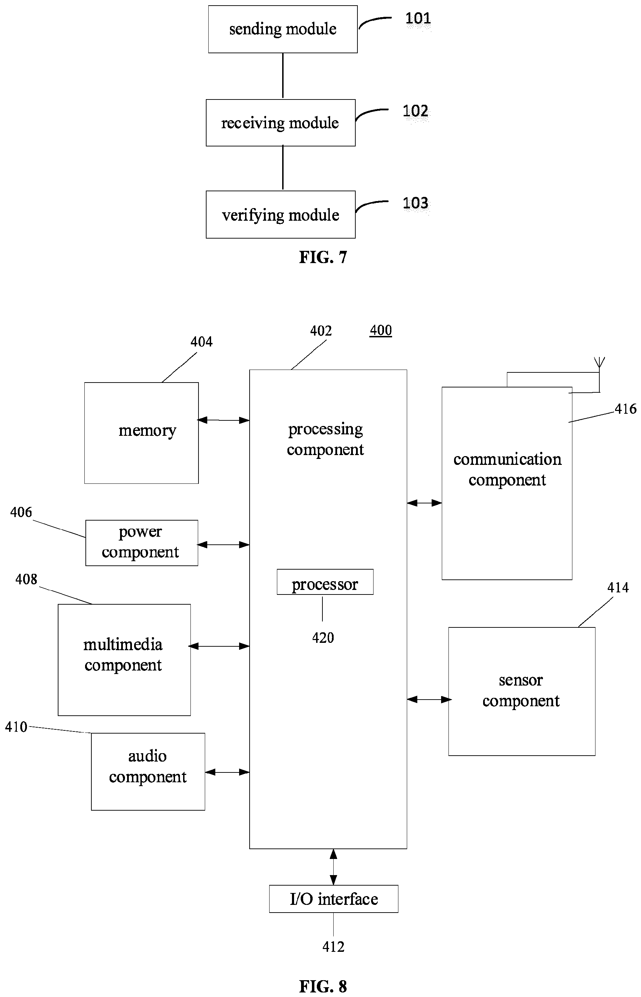

Exemplarily, referring to FIG. 7, the apparatus may include a sending module 101, a receiving module 102 and a verifying module 103, where in the process of the apparatus implementing the above method,
the sending module 101 is configured to send an information request instruction to the battery;
the receiving module 102 is configured to receive verification information sent by a storage unit, and encryption information sent by an encryption unit; and
the verifying module 103 is configured to perform verification on the battery based on pre-stored information stored in the verification device, the verification information and the encryption information, thereby determining whether the battery meets a requirement.

The apparatus can better avoid the use of counterfeit and inferior batteries, which can guarantee the brand image and enhance the user usage experience.

In an exemplary embodiment, a verification apparatus for a battery is provided. In the apparatus, the encryption information is determined by encrypting, based on first configuration information preset in the encryption unit, information to be encrypted, thereby obtaining the encryption information.

Referring to FIG. 7, in the apparatus, the verifying module 103 is specifically configured to:
obtain decryption information by decrypting the encryption information based on preset second configuration information, where the second configuration information corresponds to the first configuration information; and
perform the verification on the battery based on the decryption information, the verification information and the pre-stored information.

In an exemplary embodiment, a verification apparatus for a battery is provided. Referring to FIG. 7, in the apparatus, the verifying module 103 is specifically configured to:
verify a source of the battery based on the decryption information, the verification information and the pre-stored information, thereby determining whether the source of the battery is reliable; and
verify a quality of the battery based on setting battery information of the decryption information or setting battery information of the verification information, thereby determining whether the battery is qualified.

In an exemplary embodiment, a verification apparatus for a battery is provided. Referring to FIG. 7, in the apparatus,
the information to be encrypted includes setting battery information, the verification information includes first identification information and the setting battery information, and the pre-stored information includes second identification information; and the verifying module 103 is specifically configured to determine that the source of the battery is reliable if the decryption information matches the setting battery information of the verification information, and the pre-stored information matches the first identification information of the verification information.

In an exemplary embodiment, a verification apparatus for a battery is provided. Referring to FIG. 7, in the apparatus,
the information to be encrypted includes setting battery information and first identification information, the verification information includes the setting battery information, and the pre-stored information includes second identification information; and the verifying module 103 is specifically configured to determine that the source of the battery is reliable if the decryption information includes information matching the setting battery information of the verification information, and the decryption information includes information matching the pre-stored information.

In an exemplary embodiment, a verification apparatus for a battery is provided. Referring to FIG. 7, in the apparatus,
the information to be encrypted includes setting battery information and first identification information, the verification information includes the setting battery information and the first identification information, and the pre-stored information includes second identification information; and the verifying module 103 is specifically configured to determine that the source of the battery is reliable if the decryption information includes information matching the setting battery information of the verification information, and the decryption information or the verification information includes information matching the pre-stored information.

In an exemplary embodiment, a verification device for a battery is provided, e.g., the verification device may be a cell phone, a computer, a wearable verification device, and the like, which is not limited.

Referring to FIG. 8, the verification device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls overall operation of the verification device 400, such as operations associated with display, telephone calls, data communication, camera operations, and recording operations. The processing component 402 may include one or more processors 420 to execute an instruction, thereby completing all or some of the steps of the methods described above. In addition, the processing component 402 may include one or more modules that facilitate interaction between the processing component 402 and other components. For example, the processing component 402 may include a multimedia module to facilitate interaction between the multimedia component 408 and the processing component 402.

The memory 404 is configured to store various types of data to support the operations at the verification device 400. Examples of such data include the following for any application program or method operated on the verification device 400: instructions, contact data, phonebook data, messages, pictures, videos, etc. The memory 404 may be implemented by any type of volatile or non-volatile storage verification device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power component 406 supplies power to various components of the verification device 400. The power component 406 may include a power supply management system, one or more power supplies, and other components associated with generating, managing, and distributing power for the verification device 400.

The multimedia component 408 includes a screen that provides an output interface between the verification device 400 and a user. In some embodiments, the screen may include a liquid crystal display (LCD) and a touch panel (TP). If the screen includes a touch panel, the screen may be implemented as a touch screen to receive input instructions from the user. The touch panel includes one or more touch sensors to sense touches, swipes, and gestures on the touch panel. The touch sensor may not only sense the boundaries of the touch or swipe action, but also detect the duration and pressure associated with the touch or swipe action. In some embodiments, the multimedia component 408 includes a front-facing camera and/or a rear-facing camera. The front-facing camera and/or the rear-facing camera may receive external multimedia data when the verification device 400 is in an operating mode, such as a shooting mode or a video mode. Each of the front-facing camera and the rear-facing camera may be a fixed optical lens system or have a focal length and optical zoom capability.

The audio component 410 is configured to output and/or input audio instructions. For example, the audio component 410 includes a microphone (MIC), configured to receive external audio instructions when the verification device 400 is in an operating mode, such as a calling mode, a recording mode, and a voice recognition mode. The received audio instructions may be further stored in the memory 404 or sent via the communication component 416. In some embodiments, the audio component 410 further includes a speaker for outputting the audio instructions.

The I/ O interface 412 provides an interface between the processing component 402 and a peripheral interface module, and the peripheral interface module may be a keypad, a click wheel, a button, etc. These buttons may include, but are not limited to, a home button, a volume button, a start button, and a lock button.

The sensor component 414 includes one or more sensors configured to provide status assessment of various aspects of the verification device 400. For example, the sensor component 414 may detect an open/closed state of the verification device 400, relative positioning of the components, for example, the components are the display and small keypad of the verification device 400, the sensor component 414 may also detect a change in the position of the verification device 400 or a change in the position of one component of the verification device 400, the presence or absence of user contact with the verification device 400, the orientation or acceleration/deceleration of the verification device 400, and temperature changes of the verification device 400. The sensor component 414 may include a proximity sensor that is configured to detect the presence of nearby objects in the absence of any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate the communication between the verification device 400 and other verification devices by wired or wireless means. The verification device 400 may access a wireless network based on a communication standard, such as WiFi, 2G, 3G, or a combination thereof. In an exemplary embodiment, the communication component 416 receives broadcast instructions or broadcast-related information from an external broadcast management system via a broadcast channel. In an exemplary embodiment, the communication component 416 further includes a near-field communication (NFC) module to facilitate short-range communication. For example, the NFC module may be implemented based on the radio frequency identification (RFID) technology, infrared data association (IrDA) technology, ultra-wideband (UWB) technology, Bluetooth (BT) technology, and the like.

In an exemplary embodiment, the verification device 400 may be implemented by one or more of: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the above method.

In an exemplary embodiment, a non-transitory computer-readable storage medium including an instruction is also provided, such as the memory 404 including an instruction. The instruction described above is capable of being executed by the processor 420 of the verification device 400 to complete the above method. The processor 420 may include a central processing unit. For example, the non-transitory computer-readable storage medium may be an ROM, a random access memory (RAM), a CD-ROM, a magnetic tape, a floppy disk, or an optical data storage verification device, etc. When the instruction in the storage medium is executed by the processor of the verification device, the verification device is enabled to perform the method in the above embodiment.

After considering the specification and practicing the invention disclosed herein, those skilled in the art will easily come up with other implementation solutions of the present invention. The present application is intended to cover any variations, uses, or adaptive changes of the present invention, and the variations, uses, or adaptive changes follow the general principles of the present invention and include common knowledge or commonly used technical means in the technical field that are not disclosed in the present disclosure. The specification and embodiments are only considered to be exemplary, and the true scope and spirit of the present invention are indicated by the following claims.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. A battery encryption circuit, **characterized in that** the battery encryption circuit comprises an encryption part and a communication part, wherein the encryption part comprises a storage unit and an encryption unit;
the communication part is configured to send, to the encryption unit, information to be encrypted stored in the storage unit;
the encryption unit is configured to generate encryption information based on the information to be encrypted sent by the storage unit; and
the communication part is further configured to transmit, to a processor electrically connected to the battery encryption circuit, verification information stored in the storage unit, and the encryption information generated by the encryption unit, thereby completing battery verification.

2. The battery encryption circuit according to claim 1, wherein
the storage unit comprises at least one of a first coulombmeter or a first encryption chip; and/or
the encryption unit comprises at least one of a second coulombmeter or a second encryption chip.

3. The battery encryption circuit according to claim 1 or 2, wherein the communication part comprises an integrated circuit bus, the storage unit is electrically connected to the encryption unit via the integrated circuit bus, and both the storage unit and the encryption unit are electrically connected to the processor via the integrated circuit bus.

4. The battery encryption circuit according to claim 1 or 2, wherein the communication part comprises a first communication unit, and the first communication unit is configured to send, to the encryption unit, the information to be encrypted stored in the storage unit; and/or
the communication part comprises a second communication unit, and the second communication unit is configured to transmit, to the processor electrically connected to the battery encryption circuit, the verification information stored in the storage unit; the communication part comprises a third communication unit, and the third communication unit is configured to transmit, to the processor electrically connected to the battery encryption circuit, the encryption information generated by the encryption unit.

5. The battery encryption circuit according to claim 1 or 2, wherein
the information to be encrypted comprises setting battery information, and the verification information comprises first identification information and the setting battery information; or
the information to be encrypted comprises setting battery information and first identification information, and the verification information comprises the setting battery information; or
the information to be encrypted comprises setting battery information and first identification information, and the verification information comprises the setting battery information and the first identification information.

6. A battery, **characterized in that** the battery comprises a battery cell and a protection circuit board, wherein the protection circuit board comprises the battery encryption circuit according to any one of claims 1-5.

7. A terminal, **characterized in that** the terminal comprises a processor and the battery according to claim 5=6, wherein the battery encryption circuit of the protective circuit board of the battery is electrically connected to the processor.

8. A verification method for a battery, applied to a verification device for the battery, **characterized in that** the verification method comprises:
sending an information request instruction to the battery;
receiving verification information sent by a storage unit, and encryption information sent by an encryption unit; and
performing verification on the battery based on pre-stored information stored in the verification device, the verification information and the encryption information, thereby determining whether the battery meets a requirement.

9. The verification method for the battery according to claim 8, wherein the encryption information is determined by encrypting, based on first configuration information preset in the encryption unit, information to be encrypted, thereby obtaining the encryption information; and
the performing the verification on the battery based on the pre-stored information stored in the verification device, the verification information and the encryption information comprises:
obtaining decryption information by decrypting the encryption information based on preset second configuration information, wherein the second configuration information corresponds to the first configuration information; and
performing the verification on the battery based on the decryption information, the verification information and the pre-stored information.

10. The verification method for the battery according to claim 9, wherein the performing the verification on the battery based on the decryption information, the verification information and the pre-stored information comprises:
verifying a source of the battery based on the decryption information, the verification information and the pre-stored information, thereby determining whether the source of the battery is reliable; and
verifying a quality of the battery based on setting battery information of the decryption information or setting battery information of the verification information, thereby determining whether the battery is qualified.

11. The verification method for the battery according to claim 10, wherein the information to be encrypted comprises setting battery information, the verification information comprises first identification information and the setting battery information, and the pre-stored information comprises second identification information; and
the verifying the source of the battery based on the decryption information, the verification information and the pre-stored information comprises:
if the decryption information matches the setting battery information of the verification information, and the pre-stored information matches the first identification information of the verification information, determining the source of the battery is reliable.

12. The verification method for the battery according to claim 10, wherein
the information to be encrypted comprises setting battery information and first identification information, the verification information comprises the setting battery information, and the pre-stored information comprises second identification information; and
the verifying the source of the battery based on the decryption information, the verification information and the pre-stored information comprises:
if the decryption information comprises information matching the setting battery information of the verification information, and the decryption information comprises information matching the pre-stored information, determining the source of the battery is reliable.

13. The verification method for the battery according to claim 10, wherein
the information to be encrypted comprises setting battery information and first identification information, the verification information comprises the setting battery information and the first identification information, and the pre-stored information comprises second identification information; and
the verifying the source of the battery based on the decryption information, the verification information and the pre-stored information comprises:
if the decryption information comprises information matching the setting battery information of the verification information, and the decryption information and/or the verification information comprises information matching the pre-stored information, determining the source of the battery is reliable.

14. A verification apparatus for a battery, applied to a verification device for the battery, **characterized in that** the verification apparatus comprises:
a sending module, configured to send an information request instruction to the battery;
a receiving module, configured to receive verification information sent by a storage unit, and encryption information sent by an encryption unit; and
a verifying module, configured to perform verification on the battery based on pre-stored information stored in the verification device, the verification information and the encryption information, thereby determining whether the battery meets a requirement.

15. The verification apparatus for the battery according to claim 14, wherein the encryption information is determined by encrypting, based on first configuration information preset in the encryption unit, information to be encrypted, thereby obtaining the encryption information; and
the verifying module is specifically configured to:
obtain decryption information by decrypting the encryption information based on preset second configuration information, wherein the second configuration information corresponds to the first configuration information; and
perform the verification on the battery based on the decryption information, the verification information and the pre-stored information.

16. The verification apparatus for the battery according to claim 15, wherein the verifying module is specifically configured to:
verify a source of the battery based on the decryption information, the verification information and the pre-stored information, thereby determining whether the source of the battery is reliable; and
verify a quality of the battery based on setting battery information of the decryption information or setting battery information of the verification information, thereby determining whether the battery is qualified.

17. The verification apparatus for the battery according to claim 16, wherein the information to be encrypted comprises setting battery information, the verification information comprises first identification information and the setting battery information, and the pre-stored information comprises second identification information; and the verifying module is specifically configured to determine that the source of the battery is reliable if the decryption information matches the setting battery information of the verification information, and the pre-stored information matches the first identification information of the verification information; or
the information to be encrypted comprises setting battery information and first identification information, the verification information comprises the setting battery information, and the pre-stored information comprises second identification information; and the verifying module is specifically configured to determine that the source of the battery is reliable if the decryption information comprises information matching the setting battery information of the verification information, and the decryption information comprises information matching the pre-stored information; or
the information to be encrypted comprises setting battery information and first identification information, the verification information comprises the setting battery information and the first identification information, and the pre-stored information comprises second identification information; and the verifying module is specifically configured to determine that the source of the battery is reliable if the decryption information comprises information matching the setting battery information of the verification information, and the decryption information and/or the verification information comprises information matching the pre-stored information.

18. A verification device for a battery, **characterized in that** the verification device comprises:
a processor; and
a memory, configured to store an instruction executable by the processor; wherein
the processor is configured to perform the verification method for the battery according to any one of claims 8-13.

19. A non-transitory computer-readable storage medium, **characterized in that** when an instruction in the storage medium is executed by a processor of a verification device for a battery, the verification device is enabled to perform the verification method for the battery according to any one of claims 8-13.
